# EUROPEAN PATENT SPECIFICATION

(11) **EP 3 832 090 B1**
(45) Date of publication and mention of the grant of the patent: **14.06.2023**
(21) Application number: 19213681.0
(22) Date of filing: 04.12.2019
(51) Int. Cl.: F02C 3/14, F02C 7/14, F02C 7/224, F02C 7/228, F23R 3/34

(54) **GAS TURBINE FOR POWER PLANT APPLICATIONS WITH PRE-HEATED FUEL GAS AND METHOD FOR OPERATING THIS GAS TURBINE**
GASTURBINE FÜR KRAFTWERKSANWENDUNGEN MIT VORGEWÄRMTEM BRENNGAS UND VERFAHREN ZUM BETRIEB DIESER GASTURBINE
TURBINE À GAZ POUR DES APPLICATIONS DE CENTRALE ÉLECTRIQUE AVEC DU GAZ COMBUSTIBLE PRÉCHAUFFÉ ET PROCÉDÉ DE FONCTIONNEMENT DE CETTE TURBINE À GAZ

(43) Date of publication of application: 09.06.2021
(73) Proprietor: Ansaldo Energia Switzerland AG, 5400 Baden (CH)
(72) Inventor: WERTHWEIN, Pascal, 5400 BADEN (CH); MEIER, Matthias, 5304 ENDINGEN (CH); KAMMERER, Albert, 8050 ZÜRICH (CH); DUSOMOS, Gerard, 5604 HENDSCHIKEN (CH); LI, Xinyuan, 5436 WÜRENLOS (CH)
(74) Representative: Martini, Gabriele

(56) References cited:
- EP-A1- 3 486 566
- EP-A2- 2 206 966
- JP-A- S60 145 426
- US-A1- 2017 059 164
- US-B2- 9 695 750

## Description

### Field of the Invention

The present invention relates to the technical field of gas turbine assemblies (in the following only GT) for power plant applications. As known, a GT compresses air, mixes the compressed air with fuel, ignites the mixture in a combustor and expands the hot gas in a turbine afterwards for the generation of mechanical work on the GT's shaft. In more detail, the GT of the present application is equipped with a sequential combustion technology (preferably the applicant's sequential combustion technology), combusting fuel-air mixtures in two sequential stages. In the first combustion stage, compressed air is mixed with fuel and combusted, generating a hot gas flow. In the second stage, fuel is injected into the hot gas, leading to a self-ignition of the fuel due to the hot ambient. With respect to the two-stage combustor technology described above, the present invention solves the problem to shut-down the second stage and to operate the GT assembly, while the first stage is still in operation.

### Description of prior art

In general, a GT assembly comprises the following assemblies: compressor, combustor and turbine. The axial compressor is pressurizing air that is sucked into the compressor from the engine's environment. Compressed air is leaving the compressor at its exit into a fixed volume (called "plenum") from where the main flow is distributed to the combustor assembly and a part of the compressed air is used as cooling air. Typically but not only, the combustor assembly comprises a plurality of combustor cans and burners, mixing the pressurized air with fuel (gas or oil) and igniting this mixture. Afterwards, the resulting hot gas is expanded through a turbine. Mechanical work performed by the hot gas flow on the turbine's blades, is translated into rotational energy due to the circumferential assembled blades to the GT's rotor.

To meet both efficiency and emission targets, during full load and while operating at part and low load, multiple measures can be taken. One of those measures, but not limited to, is the Applicant's sequential combustion technology in its GTs. This technology follows the principle of a re-heat step in the GT's thermodynamic cycle. Today at least two different kinds of sequential GTs are known. According to a first embodiment, the first and the second combustor are annular shaped and are physically separated by a stage of turbine blades, called high pressure turbine. Downstream the second combustor a second turbine unit is present (called low pressure turbine). This kind of GT is produced by the Applicant and is available on the market as "GT26". According to a second embodiment of a GT with a sequential combustor, the GT is not provided with the high pressure turbine and the combustor assembly is realized in form of a plurality of can-combustors arranged as a ring around the rotor. Each can-combustor comprises a first stage and a second stage, arranged serially. Also this second kind of a GT is produced by the Applicant and is available on the market as "GT36". Those two examples of GT assemblies (GT26 and GT36) have been cited only as non-limiting examples wherein the present invention can be applied. However, the application of the present invention in a sequential can combustor GT may involves higher advantages.

As known, the use of pre-heated fuel gas (in the following only FG) in a sequential GT, for instance a FG pre-heated up to 300°C before being fed to the combustors, results in combustion efficiency benefits and improves the GT assembly performance. However, the use of this pre-heated fuel in a GT also involves some problems to be solved. Due to the fuel's high temperature, it is not possible to use conventional soft seal valves along the fuel distribution lines. Therefore, in case of a pre-heated fuel, the fuel distribution lines has to be provided with metal-seat valves. Sometimes, a GT may be operated in a so called "first-stage only operation". In this condition, the first stage of combustion is operated, only, and the valves arranged along the fuel distribution lines towards the second stage of combustion are driven to be closed. However, metal-seat valves are not a 100% tight and fuel leakage across those valves has to be expected. This leak can accumulate in the fuel distribution lines immediately upstream the second combustion stage, i.e. in the piping and fuel distribution system upstream the second stage burners. The presence of leaking FG in a shut-down combustion stage and the presence of potentially accumulating FG in the FG distribution system, provides a risk to the safe operation of the GT assembly.

EP2206966 discloses a gas turbine engine including a combustor having a first interior in which a first fuel is combustible, the first fuel including natural gas and/or a blend of natural gas and alternate gas receivable by a fuel circuit from an external source.

### Disclosure of the invention

Accordingly, a primary object of the present invention is to provide a new and inventive solution for overcoming the above problems, i.e. how to avoid undesired accumulation of leaked FG inside the fuel distribution lines, when a GT is used in first-stage only operation. In particular, the primary object of the present invention is to provide a GT according to claim 1 fed by pre-heated FG and a method for operating this GT according to claim 8.

As a preamble, a GT that can be provided with the present invention is a GT for power plant comprising:
- a compressor, configured for compressing incoming air;
- a sequential combustor assembly, configured for mixing fuel (at least FG) in the compressed air and for generating a hot gas flow; wherein the combustor assembly comprises in series a first combustion stage and a second combustion stage;
- a turbine, configured to be driven by the hot gas for performing work on a rotor;
- a fuel source configured for pre-heating the fuel and for suppling the pre-heated fuel to a fuel distribution system comprising a first line for feeding the first combustion stage and a second line for feeding the second combustion stage.

Referring to the combustor assembly, preferably this combustor assembly comprises a plurality of can combustors, wherein each can combustor comprises in series the first combustion stage and the second combustion stage. The first line of the fuel distribution system is configured for feeding all first combustion stages and the second line of the fuel distribution system is configured for feeding all second combustion stages.

Referring to the fuel source, this source is configured for feeding a plurality of different kind of fuels; according to the present invention, the claimed pre-heated fuel is FG fed to a single duct and splitted into two lines downstream.

As known, sometimes the GT may be operated in a so called "first stage only operation mode", wherein the second stage of the combustor is switch-off and the second stage fuel distribution system's valves are driven to be closed. Since the fuel is pre-heated (between 250°C and 320°C, preferably at 300°C), the fuel distribution system's control valves are metal-seat valves and therefore, during the first stage only operation mode, fuel upstream those valves can leak across that metal-seat valves. Consequently, some pre-heated fuel can accumulate upstream the shut-down second combustion stage, in particular inside a duct (claimed first duct) acting as a collector for feeding the second burners.

In this situation, the potential of fuel ignition in the first duct (with relevant damages), when getting in contact to hot gas on the combustor side, is present. In order to avoid this problem, according to the main definition of the invention, the GT moreover comprises a duct (claimed second duct) configured to be fed with cooled air and wherein this second duct is connected at one side to the first duct (where the leaked fuel is accumulated), generating a lean air-fuel mixture. Since the cooled air discloses a temperature (temperature between 320°C and 360°C, preferably at 340°C) lower than the auto-ignition temperature of the fuel, any undue ignition of the mixing media is avoided.

As known, the GT moreover comprises a control unit configured for selectively operating the GT in a first stage only mode and (in this case) for closing the valves of the second stage's fuel line. Preferably, the feeding of the cooled air to the second duct is activated by the control unit only during the first stage only operation mode (preferably continuously during the first stage only operation mode).

Please notice that with the wording "first and second duct" we mean not necessary a single duct but also distribution lines comprising more than a duct.

Preferably, the GT comprises moreover a heat exchanger (maybe a so called Once Through Cooler or "OCT"), configured for cooling compressed air exiting from the compressor and for feeding this cooled air to the turbine for cooling purposes. In this invention case, the second duct is a duct connected at the other side to the exit of the heat exchanger so that the cooled air fed in the second duct is part of the cooling air exiting from the heat exchanger. In this case, no additional source of purging gas (for instance nitrogen) is required for the purpose of the present invention.

Additionally, the cooling air fed in second duct air is also acting as purge air when switching of the combustor's second stage.

Of course, the present invention may also be defined as a method for operating a GT for power plant fed by pre-heated fuel (i.e. FG). The method may comprise the steps of:
a) providing a GT with a sequential combustor as described foregoing;
b) pre-heating the fuel (preferably between 250°C and 32°C, more preferably at 300°C) before feeding the fuel into the fuel distribution system;
c) controlling the GT for being operated in a first stage only operation mode, wherein the valves of the second stage fuel line are driven to be closed;
d) feeding (preferably continuously during the first stage only operation mode) cooled air in the second duct at a temperature below the auto ignition temperature of the pre-heated fuel leakage in the first duct (preferably between 320°C and 360°C, more preferably at 340°C).

Preferably, step d) is performed so that the cooling air is also acting as purge air when switching off the second stage.

It is to be understood that both the foregoing general description and the following detailed description are exemplary and are intended to provide further explanation of the invention as claimed. Other advantages and features of the invention will be apparent from the following description, drawings and claims.

The features of the invention believed to be novel are set forth with particularity in the appended claims.

### Brief description of drawings

Further benefits and advantages of the present invention will become apparent after a careful reading of the detailed description with appropriate reference to the accompanying drawings.

The invention itself, however, may be best understood by reference to the following detailed description of the invention, which describes an exemplary embodiment of the invention, taken in conjunction with the accompanying drawings, in which:
- figure 1 is a schematic view of an example of a GT assembly for power plants, suitable for being provided with the present invention;
- figure 2 is a schematic view of an example of a combustor section for a GT assembly of figure 1;
- figure 3 is a schematic view of an example of a fuel feeding line of the combustor section of figure 2 provided with an embodiment of the present invention.

### Detailed description of preferred embodiments of the invention

In cooperation with the attached drawings, the technical contents and detailed description of the present invention are described thereinafter according to preferred embodiments, being not used to limit its executing scope.

Reference will now be made to the drawing figures to describe the present invention in detail.

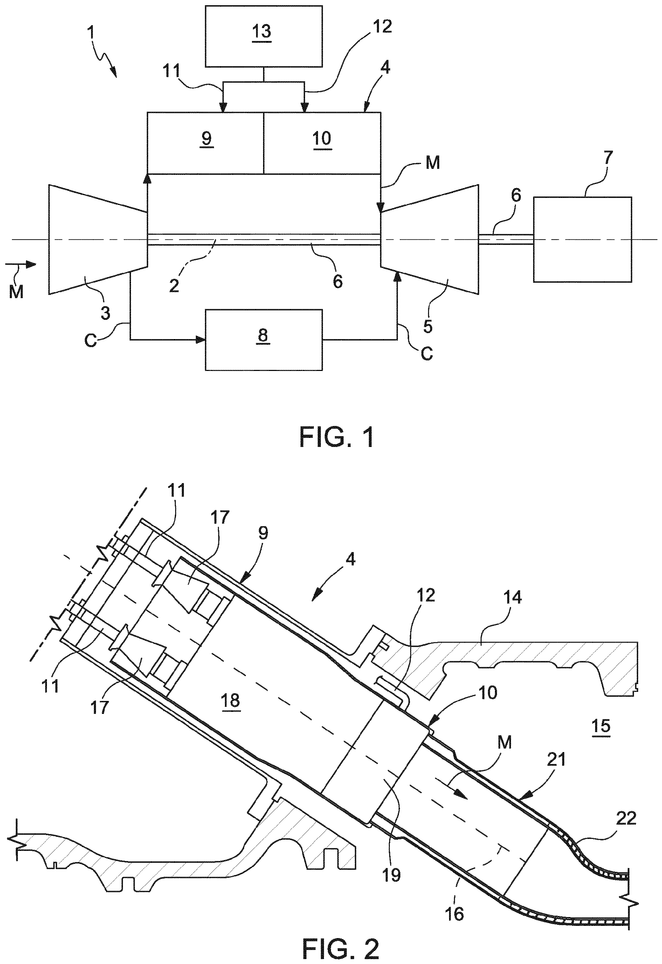

Reference is now made to Fig. 1, that is a schematic view of an embodiment of a GT assembly for power plants with sequential combustion , suitable for being provided with the present invention. Figure 1 discloses a GT 1 having a rotor 6 defining an axis 2 and comprising in series along the main flow M:
- a compressor section 3,
- a combustor section 4 wherein the compressed air is mixed with at a fuel and this mixture is combusted to create a hot gas flow,
- a turbine section 5 where the hot gas flow expands performing rotating work on the rotor 6.

According to figure 1, downstream the turbine 5 the rotor 6 drives the rotating part of a generator 7. Moreover, the GT 1 of figure 1 is a GT wherein the combustor section comprises in series a first combustion stage 9 and a second combustion stage 10, respectively fed with fuel by a first fuel distribution line 11 and a second fuel distribution line 12. The first and second fuel distribution lines 11 and 12 are fed by a common fuel supply 13. According to the present invention, the fuel supply 13 is a fuel source configured for delivering at least one kind of fuel, i.e. a FG, wherein this fuel is a pre-heated fuel, i.e. a fuel pre-heated at least up to 300°C before being fed into the first and second fuel distribution lines 11 and 12. In figure 1 the reference 8 refers to a heat exchanger, preferably a OTC, fed by compressed air spilled from the compressed C and configured for cooling this air and for suppling this cooled air to the turbine 5 for cooling purposes. The kind of GT 1 as disclosed in figure 1 is particular useful for being implemented with the present invention, i.e. with minimal new components to be added in this assembly.

Reference is now made to Fig. 2 that is an enlarged view of an embodiment of the combustor section 4 of figure 1. In particular, figure 2 discloses a can combustor 4 of a plurality of can combustors 4 arranged as a ring around the turbine axis and forming the combustor section 4. In each can combustor 4, two combustion stages in series are enclosed. Each can combustor 4 is housed in a relative portal hole of an outer casing 14 defining a plenum 15 where the compresses air are delivered by the compressor 3. Each can combustor 4 has an axis 16 and comprises in series along the main flow M a first combustor 9, and a second combustor 10. In particular, the first combustor 9 comprises a plurality of first burners 17 followed by a first combustion chamber 18. The second combustor 10 comprises a second burner assembly 19 followed by a second combustion chamber 20. According to the embodiment of figure 2, the fuel is fed to the second burner 19 by a second fuel distribution line 12 extending in this case outside the combustor casing 21. Downstream the second combustion chamber 20, a transition duct 22 is present for guiding the hot gas toward the turbine 5. The second fuel distribution line 12 of figure 2 may be realized in form of a circular collector configured for feeding all can combustor second stage 10. As disclosed in figure 1, the second fuel distribution line 12 is connected to a fuel source 13 feeding also the first fuel distribution line 11.

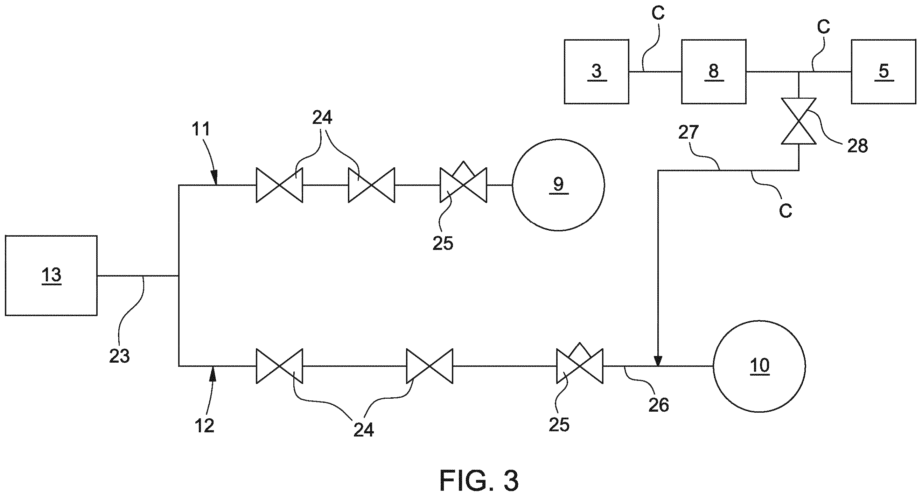

Reference is made now to figure 3 that is a schematic view of an example of a fuel feeding system of the combustor section of figures 1 and 2. As foregoing mentioned, the fuel source 13 is configured for delivering a pre-heated fuel (preferably from 230°C to 300C°) in the first fuel distribution line 11 and in the second fuel distribution line 12, configured for feeding this fuel to the first combustion stage 9 and to the second 10 combustion stage of the GT 1, respectively, . Each line 11 12 of the fuel feeding system is provided with at least a valve, preferably a metal-seat valve due to the high temperature of the fuel. In the example disclosed in figure 3, the first 11 and second fuel distribution line 12, derived from a common duct 23 exiting from the pre-heated fuel source 13, are provided with two shot-off valves 24 and one control valve 25 downstream the shot-off valves 24 and upstream the combustion stages 9 and 10. In view of the above, between the control valve 25 and the second combustion stage 10, a duct 26 is present, preferably in form of a collector. In case of first stage only operation mode, the valves 24 25 along the second fuel distribution line 12 are driven to be closed for avoiding fuel being fed to the shut-down second combustion stage 10. However, since those valves 24, 25 are metal-seat valves (soft-seal valves cannot be used due to the high fuel temperature), fuel leakage can occur and therefore, some leaked fuel may accumulate in the duct 26 between the control valve 25 and the second combustion stage 10. In order to avoid any undesired ignition of this accumulated fuel in the duct 26 (in case of hot gas ingestion from the combustion chamber, ignition may occur immediately). According to the general definition of the present invention, cooled air is fed to this duct 26 (i.e. air having a temperature less than the auto ignition temperature of the fuel leakage, for instance no more than 340°C). Thereby, two effects are generated. On one side, a lean mixture is generated having a temperature below the flammability limit of the fuel and on the other side a purge flow of the leaking fuel from the duct 26 is generated. According to the embodiment of figure 3, the cooled air fed in the duct 26 is part of the cooling air exiting from the heat exchanger 8, in turn fed by compressed air and configured for generating cooling air to be supplied to the turbine 5. Since this heat exchanger 8 is already present in the GT assembly, for performing the present invention it is only necessary to provide a duct 27 (comprising at least a valves 28) connecting the exit of the heat exchanger 8 to the duct 26. Preferably, this feeding of cooled air to the duct 27 may be performed continuously during the first stage only operation mode.

Although the invention has been explained in relation to its preferred embodiment(s) as mentioned above, it is to be understood that many other possible modifications and variations can be made without departing from the scope of the present invention. It is, therefore, contemplated that the appended claim or claims will cover such modifications and variations that fall within the true scope of the invention.

## Claims

1. A gas turbine for power plant application fed by pre-heated fuel gas; the gas turbine (1) comprises:
- a compressor (3) configured for compressing incoming air;
- a sequential combustor assembly (4) configured for feeding at least a fuel in the compressed air and generating a hot gas flow; wherein the combustor assembly (4) comprises in series a first combustion stage (9) and a second combustion stage (10);
- a turbine (5) configured to be driven by the hot gas for performing work on a rotor (6);
- a fuel source (13) configured for suppling pre-heated fuel to a fuel gas distribution system comprising a first line (11) for feeding the first combustion stage (9) and a second line (12) for feeding the second combustion stage (10);
the second line (12) comprising at least an upstream shot-off valve (24) and at least a downstream control valve (25);
the at least an upstream shot-off valve (24) and the at least a downstream control valve (25) are metal-seat valves; between the at least a downstream control valve (25) and the second combustion stage (10) a first duct (26) being present where leakage fuel gas can accumulate;
wherein the gas turbine (1) moreover comprises a second duct (27) configured for feeding cooled air into the first duct (26) wherein the cooled air has a temperature lower than the auto ignition temperature of the fuel gas;
wherein the second duct (27) comprises at least a valve (28) and the gas turbine (1) moreover comprises:
- a control unit configured for operating the gas turbine (1) in a first stage only mode wherein the at least an upstream shot-off valve (24) and the at least a downstream control valve (25) of the second line (12) are driven to be closed; the control unit being configured for feeding the cooling air in the second duct (27) during the first-stage only mode operation by opening the valve (28) of the second duct (27).

2. Gas turbine as claimed in claim 1, wherein the control unit being configured for continuously feeding the cooled air in the second duct (27) during the first stage only mode operation.

3. Gas turbine as claimed in any one of the foregoing claims, wherein the gas turbine (1) moreover comprises:
- a heat exchanger (8) configured for cooling compressed air spilled from the compressor (3) and for feeding this cooled air to the turbine (5) for cooling purpose; the second duct (27) being connected downstream to the exit of the heat exchanger (8) so that the cooled air that is fed in the second duct (27) is part of the cooling air exiting from the heat exchanger (8).

4. Gas turbine as claimed in claim 3, wherein the heat exchanger (8) is configured for cooling the compressed air at a temperature between 320°C and 360°C, preferably at 340°C.

5. Gas turbine as claimed in claim 3 or 4, wherein the heat exchanger (8) is configured for delivering the cooled air at a pressure higher than the pressure of the leakage fuel accumulated in the first duct (26) so that the cooled air is also acting as purge air.

6. Gas turbine as claimed in any one of the foregoing claims, wherein the combustor assembly (4) comprises a plurality of can combustors (4); each can combustor (4) comprising in series the first combustion stage (9) and the second combustion stage (10).

7. Gas turbine as claimed in any one of the foregoing claims, wherein the fuel source (13) is configured pre-heating the fuel up to a temperature of 320°C, preferably at 300°C.

8. A method for operating a gas turbine for power plant with a sequential combustor; the method comprising the steps of:
a) providing a gas turbine with a sequential combustor (1) as claimed in claim 1;
b) pre-heating the fuel gas before feeding the fuel gas distribution system;
c) controlling the gas turbine (1) for being operated in a first stage only mode wherein the at least an upstream shot-off valve (24) and the at least a downstream control valve (25) of the second line (12) are driven to be closed;
d) feeding cooled air in the second duct (27) at a temperature below the auto ignition temperature of the pre-heated fuel leakage into the first duct (26).

9. Method as claimed in claim 8, wherein:
- the step b) is performed so that the fuel is pre-heated up to a temperature of 320°C, preferably at 300°C;

10. Method as claimed in any one of the foregoing claims from 8 to 9, wherein:
- the step d) is performed so that the cooled air is compressed air spilled by the compressor (3) and cooled by a heat exchanger (8) at a temperature between 320°C and 360°C, preferably at 340°C.

11. Method as claimed in any one of the foregoing claims from 8 to 10, wherein the step d) is performed continuously during the first stage only operation.

12. Method as claimed in any one of the foregoing claims from 8 to 11, wherein the step d) is performed so that the cooled air is also acting as purge air having a pressure higher than the pressure of the leaked fuel accumulated in the first duct (26).

## Patentansprüche

1. Gasturbine für Kraftwerksanwendungen, die mit vorgewärmtem Brenngas gespeist wird; wobei die Gasturbine (1) umfasst:
- einen Verdichter (3), der dazu konfiguriert ist, einströmende Luft zu verdichten;
- eine sequentielle Brenneranordnung (4), die dazu konfiguriert ist, wenigstens einen Brennstoff in die verdichtete Luft einzuspeisen und einen Heißgasstrom zu erzeugen; wobei die Brenneranordnung (4) in Reihe eine erste Verbrennungsstufe (9) und eine zweite Verbrennungsstufe (10) umfasst;
- eine Turbine (5), die dazu konfiguriert ist, von dem heißen Gas angetrieben zu werden, um Arbeit an einem Rotor (6) zu verrichten;
- eine Brennstoffquelle (13), die dazu konfiguriert ist, vorgewärmten Brennstoff an ein Brenngasverteilungssystem zu liefern, das eine erste Leitung (11) zur Speisung der ersten Verbrennungsstufe (9) und eine zweite Leitung (12) zur Speisung der zweiten Verbrennungsstufe (10) umfasst; wobei die zweite Leitung (12) wenigstens ein stromaufwärts gelegenes Abschaltventil (24) und wenigstens ein stromabwärts gelegene Steuerventil (25) umfasst; wobei das wenigstens eine stromaufwärts gelegene Abschaltventil (24) und das wenigstens eine stromabwärts gelegene Steuerventil (25) Ventile mit Metallsitz sind; wobei zwischen dem wenigstens einen stromabwärts gelegenen Steuerventil (25) und der zweiten Verbrennungsstufe (10) ein erster Kanal (26) vorhanden ist, in dem sich Leckage-Brenngas ansammeln kann;
wobei die Gasturbine (1) außerdem einen zweiten Kanal (27) umfasst, der dazu konfiguriert ist, gekühlte Luft in den ersten Kanal (26) einzuspeisen, wobei die gekühlte Luft eine Temperatur aufweist, die niedriger als die Selbstentzündungstemperatur des Brenngases ist;
wobei der zweite Kanal (27) wenigstens ein Ventil (28) umfasst, und wobei die Gasturbine (1) außerdem umfasst:
- eine Steuereinheit, die dazu konfiguriert ist, die Gasturbine (1) in einem Nur-erste-Stufe-Modus zu betreiben, wobei das wenigstens eine stromaufwärts gelegene Abschaltventil (24) und das wenigstens eine stromabwärts gelegene Steuerventil (25) der zweiten Leitung (12) so angesteuert werden, dass sie geschlossen sind; wobei die Steuereinheit dazu konfiguriert ist, während des Betriebs im Nur-erste-Stufe-Modus durch Öffnen des Ventils (28) der zweiten Leitung (27) die Kühlluft in die zweite Leitung (27) einzuspeisen.

2. Gasturbine nach Anspruch 1, wobei die Steuereinheit dazu konfiguriert ist, während des Betriebs im Nur-erste-Stufe-Modus die gekühlte Luft kontinuierlich in den zweiten Kanal (27) einzuspeisen.

3. Gasturbine nach einem der vorangehenden Ansprüche, wobei die Gasturbine (1) außerdem umfasst:
- einen Wärmetauscher (8), der dazu konfiguriert ist, die aus dem Verdichter (3) austretende Druckluft zu kühlen und diese gekühlte Luft der Turbine (5) zu Kühlzwecken zuzuführen; wobei der zweite Kanal (27) stromabwärts mit dem Ausgang des Wärmetauschers (8) verbunden ist, so dass die gekühlte Luft, die in den zweiten Kanal (27) eingespeist wird, Teil der aus dem Wärmetauscher (8) austretenden Kühlluft ist.

4. Gasturbine nach Anspruch 3, wobei der Wärmetauscher (8) dazu konfiguriert ist, die verdichtete Luft auf eine Temperatur zwischen 320°C und 360°C, vorzugsweise auf 340°C, abzukühlen.

5. Gasturbine nach Anspruch 3 oder 4, wobei der Wärmetauscher (8) dazu konfiguriert ist, die gekühlte Luft mit einem Druck zu liefern, der höher ist als der Druck des im ersten Kanal (26) angesammelten Leckage-Brennstoffs, so dass die gekühlte Luft auch als Spülluft wirkt.

6. Gasturbine nach einem der vorangehenden Ansprüche, wobei die Brenneranordnung (4) mehrere Dosenbrenner (4) umfasst; wobei jeder Dosenbrenner (4) in Reihe die erste Verbrennungsstufe (9) und die zweite Verbrennungsstufe (10) umfasst.

7. Gasturbine nach einem der vorangehenden Ansprüche, wobei die Brennstoffquelle (13) dazu konfiguriert ist, den Brennstoff auf eine Temperatur von 320°C, vorzugsweise auf 300°C, vorzuheizen.

8. Verfahren zum Betreiben einer Gasturbine für ein Kraftwerk mit einer sequentiellen Brenneranordnung;
wobei das Verfahren die Schritte umfasst:
a) Bereitstellen einer Gasturbine mit einer sequentiellen Brenneranordnung (1) nach Anspruch 1;
b) Vorwärmen des Brenngases vor Einspeisung in das Brenngasverteilungssystem;
c) Steuern der Gasturbine (1) für einen Betrieb in einem Nur-erste-Stufe-Modus, wobei das wenigstens eine stromaufwärts gelegene Abschaltventil (24) und das wenigstens eine stromabwärts gelegene Steuerventil (25) der zweiten Leitung (12) so angesteuert werden, dass sie geschlossen werden;
d) Einspeisen von gekühlter Luft in die zweite Leitung (27) mit einer Temperatur unterhalb der Selbstentzündungstemperatur des in die erste Leitung (26) als Leckage austretenden vorgewärmten Brennstoffs.

9. Verfahren nach Anspruch 8, wobei:
- der Schritt b) so durchgeführt wird, dass der Brennstoff auf eine Temperatur von 320°C, vorzugsweise auf 300°C, vorgewärmt wird.

10. Verfahren nach einem der vorangehenden Ansprüche 8 bis 9, wobei:
- der Schritt d) so durchgeführt wird, dass die gekühlten Luft verdichtete Luft ist, die von dem Verdichter (3) ausgestoßen und durch einen Wärmetauscher (8) auf eine Temperatur zwischen 320°C und 360°C, vorzugsweise auf 340°C, gekühlt wird.

11. Verfahren nach einem der vorangehenden Ansprüche 8 bis 10, wobei der Schritt d) während des Betriebs im Nur-erste-Stufe-Modus kontinuierlich durchgeführt wird.

12. Verfahren nach einem der vorangehenden Ansprüche 8 bis 11, wobei der Schritt d) so durchgeführt wird, dass die gekühlte Luft auch als Spülluft wirkt, die einen höheren Druck aufweist als der Druck des in der ersten Leitung (26) angesammelten Leckage-Brennstoffs.

## Revendications

1. Turbine à gaz pour une application en centrale électrique alimentée par du gaz combustible préchauffé ; la turbine à gaz (1) comprend :
- un compresseur (3) pour comprimer l'air entrant ;
- un ensemble de chambre de combustion séquentielle (4) configuré pour alimenter au moins un combustible dans l'air comprimé et générer un flux de gaz chaud ; dans lequel l'ensemble de chambre combustion (4) comprend en série un premier étage de combustion (9) et un second étage de combustion (10) ;
- une turbine (5) configurée pour être entraînée par le gaz chaud pour effectuer un travail sur un rotor (6) ;
- une source de combustible (13) configurée pour fournir du combustible préchauffé à un système de distribution de gaz combustible comprenant une première ligne (11) pour alimenter le premier étage de combustion (9) et une seconde ligne (12) pour alimenter le second étage de combustion (10) ; la seconde ligne (12) comprenant au moins une vanne d'arrêt amont (24) et au moins une vanne de commande aval (25) ; l'au moins une vanne d'arrêt amont (24) et l'au moins une vanne de commande aval (25) sont des soupapes à siège métallique ; entre l'au moins une vanne de commande aval (25) et le deuxième étage de combustion (10), un premier conduit (26) est présent, où le gaz combustible de fuite peut s'accumuler ;
dans lequel la turbine à gaz (1) comprend en outre un deuxième conduit (27) configuré pour alimenter de l'air refroidi dans le premier conduit (26), dans lequel l'air refroidi a une température inférieure à la température d'auto-inflammation du gaz combustible ;
dans lequel
le deuxième conduit (27) comprend au moins une vanne (28) et la turbine à gaz (1) comprend en outre :
- une unité de commande configurée pour faire fonctionner la turbine à gaz (1) dans un mode premier étage uniquement dans lequel l'au moins une vanne d'arrêt amont (24) et l'au moins une vanne de commande aval (25) de la deuxième ligne (12) sont entraînées pour être fermées ; l'unité de commande étant configurée pour alimenter l'air de refroidissement dans le deuxième conduit (27) pendant le fonctionnement en mode premier étage uniquement en ouvrant la vanne (28) du deuxième conduit (27).

2. Turbine à gaz selon la revendication 1, dans laquelle l'unité de commande est configurée pour alimenter en continu l'air refroidi dans le second conduit (27) pendant le fonctionnement en mode premier étage uniquement.

3. Turbine à gaz selon l'une quelconque des revendications précédentes, dans laquelle la turbine à gaz (1) comprend en outre :
- un échangeur de chaleur (8) configuré pour refroidir l'air comprimé déversé depuis le compresseur (3) et pour alimenter cet air refroidi vers la turbine (5) à des fins de refroidissement ; le second conduit (27) étant raccordé en aval à la sortie de l'échangeur de chaleur (8) de sorte que l'air refroidi qui est alimenté dans le second conduit (27) fait partie de l'air de refroidissement sortant de l'échangeur de chaleur (8).

4. Turbine à gaz selon la revendication 3, dans laquelle l'échangeur de chaleur (8) est configuré pour refroidir l'air comprimé à une température comprise entre 320 °C et 360 °C, de préférence à 340 °C.

5. Turbine à gaz selon la revendication 3 ou 4, dans laquelle l'échangeur de chaleur (8) est configuré pour délivrer l'air refroidi à une pression supérieure à la pression du combustible de fuite accumulé dans le premier conduit (26) de sorte que l'air refroidi agit également comme air de purge.

6. Turbine à gaz selon l'une quelconque des revendications précédentes, dans laquelle l'ensemble de chambre de combustion (4) comprend une pluralité de chambres de combustion tubulaires (4) ; chaque chambre de combustion tubulaire (4) comprenant en série le premier étage de combustion (9) et le second étage de combustion (10).

7. Turbine à gaz selon l'une quelconque des revendications précédentes, dans laquelle la source de combustible (13) est configurée pour préchauffer le combustible jusqu'à une température de 320 °C, de préférence à 300 °C.

8. Procédé d'exploitation d'une turbine à gaz pour une centrale électrique avec une chambre de combustion séquentielle ; le procédé comprenant les étapes suivantes :
a) fournir une turbine à gaz avec une chambre de combustion séquentielle (1) selon la revendication 1 ;
b) préchauffer le gaz combustible avant d'alimenter le système de distribution de gaz combustible ;
c) commander la turbine à gaz (1) pour qu'elle fonctionne dans un mode à au moins un étage amont uniquement, dans lequel la vanne d'arrêt (24) et l'au moins une vanne de commande aval (25) de la deuxième ligne (12) sont entraînées pour être fermées ;
d) alimenter de l'air refroidi dans le second conduit (27) à une température inférieure à la température d'auto-inflammation du combustible préchauffé de fuite dans le premier conduit (26).

9. Procédé selon la revendication 8, dans lequel :
- l'étape b) est réalisée de manière à ce que le combustible soit préchauffé jusqu'à une température de 320 °C, de préférence à 300 °C ;

10. Procédé selon l'une quelconque des revendications précédentes 8 à 9, dans lequel :
- l'étape d) est réalisée de sorte que l'air refroidi est de l'air comprimé déversé par le compresseur (3) et refroidi par un échangeur de chaleur (8) à une température comprise entre 320 °C et 360 °C, de préférence à 340 °C.

11. Procédé selon l'une quelconque des revendications précédentes 8 à 10, dans lequel l'étape d) est réalisée en continu pendant le fonctionnement du premier étage seul.

12. Procédé selon l'une quelconque des revendications précédentes 8 à 11, dans lequel l'étape d) est réalisée de sorte que l'air refroidi agisse également comme air de purge ayant une pression supérieure à la pression du combustible de fuite accumulé dans le premier conduit (26).
